# EUROPEAN PATENT SPECIFICATION

(11) **EP 2 797 979 B1**
(45) Date of publication and mention of the grant of the patent: **04.11.2015**
(21) Application number: 12815951.4
(22) Date of filing: 21.12.2012
(51) Int. Cl.: C08G 18/58, C08G 59/18, C08G 18/10, C08G 59/50, C08L 63/00

(54) **LOW TEMPERATURE CURABLE EPOXY SYSTEM**
BEI NIEDRIGTEMPERATUR HÄRTBARES EPOXIDSYSTEM
SYSTÈME ÉPOXY DURCISSABLE À BASSE TEMPÉRATURE

(30) Priority: 30.12.2011 US 201161631247 P
(43) Date of publication of application: 05.11.2014
(73) Proprietor: Dow Global Technologies LLC, Midland, MI 48674 (US)
(72) Inventor: BALIJEPALLI, Bharati, Midland, MI 48640 (US); TURAKHIA, Rajesh, H., Lake Jackson, TX 77566 (US); NAIK, Hemant A., Twinsbur, OH 44087 (US)
(74) Representative: Beck Greener
(86) International application number: PCT/US2012/071295
(87) International publication number: WO 2013/101740

(56) References cited:
- EP-A1- 1 788 048
- EP-A2- 0 767 189
- WO-A1-00/01659
- US-A1- 2005 143 496
- US-A1- 2008 199 717
- US-A1- 2009 023 846
- DATABASE CA [Online] CHEMICAL ABSTRACTS SERVICE, COLUMBUS, OHIO, US; 13 September 2010 (2010-09-13), LI, YUNDE ET AL: "Room temperature moisture-curable heavily anticorrosive coating with low surface treatment demand for substrates", XP002715443, retrieved from STN Database accession no. 2010:1144944 -& CN 101 824 265 A (BIAM NEW MATERIALS TECHNOLOGY ENGINEERING CO LTD) 8 September 2010 (2010-09-08)

## Description

### Field of Disclosure

The present disclosure relates generally to a curable epoxy system and more specifically to a low temperature curable epoxy system.

### Background

Epoxy resins have been used for the priming, repair, protection and coating of concrete surfaces. Epoxy resins are an excellent choice for these applications due to their combination of low cost and performance in terms of mechanical strength, chemical resistance, corrosion protection and excellent adhesion properties. A drawback of standard epoxy resins, however, is that they do not cure satisfactorily below about 10 °C, let alone at 0 °C to 5 °C.

This drawback is especially seen when concrete is used in the area of road construction and/or repair, and bridge construction and/or repair. In these applications, epoxy resins that can become traffic bearing after four to six hours at 25 °C can take greater than twenty-four hours to achieve these same properties at 0 °C. This restricts their use to late spring, summer and early fall in colder climates, since standard epoxy systems do not cure satisfactorily at the low temperatures encountered during the rest of the year.

To date, a commercial epoxy resin that can become traffic bearing in six hours at 0 °C has not been found. Conventional reactive curing agents for hardening epoxy resins include aliphatic polyamines, polyamides, aromatic polyamines, cyclic aliphatic polyamines, amino-substituted aliphatic alcohols and phenols and epoxy adducts of aliphatic and cycloaliphatic polyamines. However, the curing of polyepoxides with such known conventional curing agents can be carried out rapidly only in a high temperature range, such as of 25 °C to 160 °C, conventionally 60 °C to 120 °C. While epoxy adducts of amines and Mannich bases are known to improve epoxy cure speed at lower temperatures, they suffer from several disadvantages. The former curing agents are too viscous, while hardened epoxy resins obtained with the latter hardeners are unsatisfactory in flexibility and the resulting coatings are too brittle for roadway applications.

Other approaches that have been tried for improving epoxy cure speed at low temperatures have included the use of catalysts and accelerators and/or faster reacting resins, among others. These approaches, however, also have limitations, such as generation of uncontrollable exotherms, very high viscosity of components and mix making processing and wetting of the concrete substrate difficult, the continued use of volatile organic compounds (VOCs) and the inability of the epoxy resin system to cure in six hours or less in a temperature range of 0 °C to 5 °C to achieve the performance properties necessary for roadway applications.

A need, therefore, exists to improve the curing of epoxy resins at 0 °C to 5 °C while maintaining the flexibility of the cured coating

### Summary

The present disclosure provides an epoxy system that achieves a reasonable cure speed at low temperatures (e.g., 0 °C to 5 °C.), has a low mix viscosity, improved flexibility upon cure (as measured by elongation) and a compressive strength as tested according to ASTM C109, which can satisfy state and federal Department of Transportation requirements and European requirements regarding concrete structures that are required to be epoxy coated.

For the various embodiments, the epoxy system includes a Part A having an epoxy resin component present in a range of 20 weight percent (wt%) to 70 wt%, based on the total weight of the Part A; a flexibilizer present in a range from 20 wt% to 60 wt%, based on the total weight of the Part A; and a catalyst present in the range of 3 wt% to 7 wt% based on the total weight of the Part A, where the wt% of the components of the Part A of the epoxy system totals 100 wt%; and a Part B having a Mannich base hardener.

Embodiments of the present disclosure also include a concrete structure that includes a reaction product of the epoxy system.

Embodiments of the present disclosure also include a method of forming a cured composition that includes admixing a Part A and a Part B of the epoxy system, as discussed above, and curing the admixture of the Part A and the Part B as a film at a temperature in a range from 0 °C to 5 °C for a time in a range from 6 to 8 hours to achieve sufficient mechanical properties to become traffic bearing (e.g., according to DOT requirements for the State of Pennsylvania - PENN DOT Special Provision - c10431 ITEM 9043-2101 (ITEM 9043-0101) - EPOXY-BASED SURFACE TREATMENT FOR BRIDGE DECKS)).

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Brief Description of the Figures

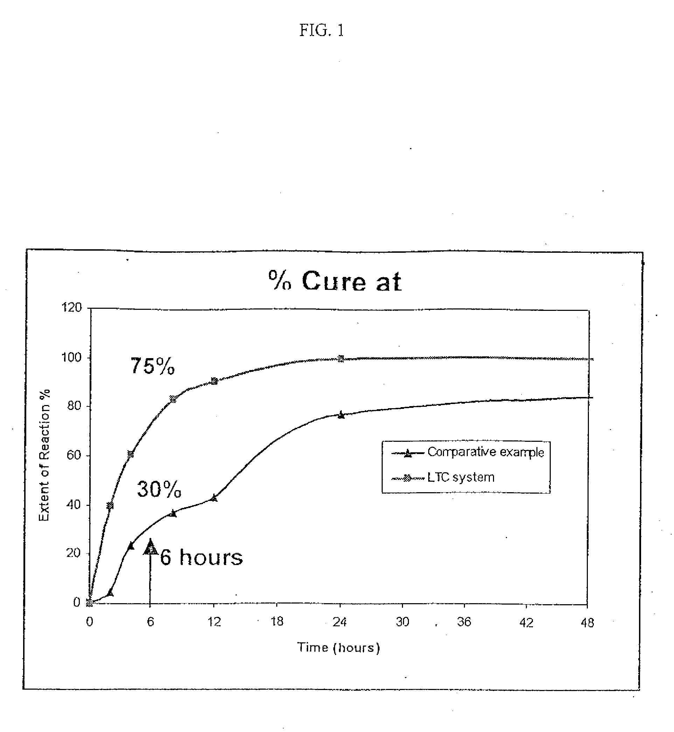

Figure 1 shows the development of cure over time for an epoxy system according to one embodiment of the present disclosure and the comparative example, obtained using Differential Scanning Calorimetry (DSC).

### Detailed Description

The present disclosure provides an epoxy system having a Part A and a Part B that when combined cure at a temperature from 0 °C to 5 °C for a time of 6 to 8 hours to achieve sufficient mechanical properties so that the cured coating can become traffic bearing according to the requirements of state and federal level Department of Transportation (DOT) and European requirements. Both temperature and time to achieve these properties allows the epoxy system of the present disclosure to be usable in civil engineering applications, such as overlying highway bridge decks and pavement markings in cold climates, when other conventional commercial epoxy resins would not.

Embodiments of the present disclosure provide for an epoxy system having a Part A and a Part B that, upon mixing, cure to form a flexible coating that can satisfy state and federal level Department of Transportation (DOT) requirements along with European requirements. Specifically, the epoxy system of the present disclosure meets state and federal level DOT and European requirements with respect to compressive strength within 6 hours at temperatures as low as 0 °C. This allows the epoxy system of the present disclosure to extend the construction season into the winter months in cold climates.

Besides applications in civil engineering, the epoxy system of the present disclosure can be useful in protecting concrete in other outdoor applications, such as parking decks and/or concrete structures that need protection from water (e.g., water proofing) and/or protection from chemicals (e.g., salt). The epoxy system of the present disclosure can also be used as an adhesive between concrete segments or members. The epoxy system of the present disclosure can also be used with other types of masonry and/or metal materials.

In addition to achieving rapid cure at low temperatures (e.g., 0 °C), the epoxy system of the present disclosure has a lower initial viscosity, enhanced flexibility and elongation characteristics upon curing, and a compressive strength upon curing, as tested according to ASTM C109, that can satisfy state and federal United States Department of Transportation requirements and European requirements regarding concrete structures that are required to be epoxy coated.

The epoxy system described here includes a Part A having an epoxy resin component, a flexibilizer and a catalyst, and a Part B having an epoxy curative component, wherein the flexibilizer is present in an amount sufficient to impart the afore-mentioned enhanced flexibility and elongation characteristics to the cured compositions. By way of a non-limiting example, the epoxy resin component can include two or more flexibilizers, as will be discussed more fully herein, which in total account for 20 to 60 weight percent (wt%) of the total weight of the epoxy resin component. The term "flexibilizer," as used herein, means a material having the ability to impart flexibility to the cured epoxy system of the present disclosure. Accordingly, flexibilizers include, without limitation, those materials that function as flexibilizers in their own right, other materials that contain additional materials that function as flexibilizers, as well as still other materials that, while not containing materials conventionally thought to function as flexibilizers, nonetheless possess flexibility-imparting properties.

As discussed herein, the epoxy system of the present disclosure includes a Part A having: (a) an epoxy resin component, comprising at least one epoxy resin present in a range from 20 wt% to 70 wt%, based on the total weight of Part A; (b) a flexibilizer present in a range from 20 wt% to 60 wt%, based on the total weight of Part A, and (c) a catalyst present in a range from 3 wt% to 7 wt%, based on the total weight of Part A, were the wt% of the components of Part A of totals 100 wt%; and a Part B having an epoxy curative component where the Part A and the Part B of the epoxy system cure at a temperature in a range from 0 °C to 5 °C in 6 to 8 hours. The epoxy curative component of Part B includes a Mannich base hardener. The Mannich base hardener of the epoxy system can be phenol free.

The present disclosure also includes a method of forming a cured composition that includes admixing the Part A and the Part B of the epoxy system, as discussed herein, and curing the admixture of the Part A and the Part B as a film at a temperature in a range from 0 °C to 5 °C for a time in a range from 6 to 8 hours to achieve sufficient mechanical properties to become traffic bearing. The method can also include preparing the Part A by admixing the components of the Part A, providing the Part B; and contacting the Part A and the Part B of the epoxy system under reaction conditions comprising a temperature in a range from 0 to 5 °C for a time of 6 to 8 hours. The epoxy system of the present disclosure can also cure at a temperature of 25 °C (77 °F) in a time of 3 hours to achieve sufficient mechanical properties so that it can become traffic bearing according to the requirements of state and federal level DOT and European requirements.

The epoxy system (e.g., Part A and Part B) has an initial viscosity of 1500 to 7000 millipascal seconds (mPa-s) measured at 23 °C according to ASTM D445. The epoxy system cures to have a glass transition temperature (Tg) of 30 °C to 50 °C as measured by Differential Scanning Calorimetry (DSC). The epoxy system cures to have a Shore D hardness of at least 73 in 24 hours according to ASTM D2240. The epoxy system has a thin film set time of no more than 6 to 8 hours at 0 °C according to ASTM D 1640. The epoxy system has a thin film set time of no more than 4 to 7 hours at 5 °C according to ASTM D 1640.

Embodiments of the present disclosure also include a concrete structure that includes the cured reaction product of the epoxy system of the present disclosure.

Each of the Part A and the Part B of the epoxy system brings specific properties to the cured epoxy system. Specifically, the Part A of the epoxy system imparts both flexibility and toughness, while the Part B of the epoxy system allows for rapid curing.

For the Part A, the epoxy resin component can be present in a range from 20 wt% to 70 wt% of the total weight of the Part A of the epoxy system. In another embodiment, the epoxy resin component can be present in a range from 30 wt% to 65 wt% of the total weight of the Part A of the epoxy system. In yet another embodiment, the epoxy resin component can be present in a range from 50 wt% to 60 wt% of the total weight of the Part A of the epoxy system.

The epoxy resin component preferably includes at least one liquid epoxy resin. The liquid epoxy resin component provides, in addition to adhesion properties, chemical resistance, corrosion protection and mechanical strength to the cured epoxy system of the present disclosure. Liquid epoxy resins useful in the present disclosure include those compounds containing at least one vicinal epoxy group and may include a wide variety of epoxy compounds. For example, the liquid epoxy resin may be saturated or unsaturated, aliphatic, cycloaliphatic, aromatic or heterocyclic and may be substituted. The liquid epoxy resin may also be monomeric or polymeric.

The liquid epoxy resin useful in the present disclosure may be selected from those known in the art. For example, an extensive enumeration of liquid epoxy resins useful in the epoxy system of the present disclosure include liquid epoxy resins described by Pham, H. Q. and Marks, M. J. Epoxy Resins in the Kirk-Othmer Encyclopedia of Chemical Technology; John Wiley & Sons, Inc.: online December 04, 2004 and in the references therein; in Lee, H. and Neville, K., Handbook of Epoxy Resins, McGraw-Hill Book Company, New York, 1967, Chapter 2, pages 257-307 and in the references therein; May, C. A. Ed. Epoxy Resins: Chemistry and Technology, Marcel Dekker Inc.: New York, 1988 and in the references therein; and in U.S. Patent No. 3,117,099; all which are incorporated herein by reference.

The epoxy resins, used in embodiments disclosed herein for the epoxy resin component of the present disclosure, may vary and include conventional and commercially available epoxy resins, which may be used alone or in combinations of two or more. In choosing epoxy resins for the epoxy resin composition disclosed herein, consideration should not only be given to properties of the final product, but also to viscosity and other properties that may influence the processing of the epoxy system.

Particularly suitable epoxy resins are based on reaction products of polyfunctional alcohols, phenols, cycloaliphatic carboxylic acids, aromatic amines, or aminophenols with epichlorohydrin. Examples include, but are not limited to, bisphenol A diglycidyl ether, bisphenol F diglycidyl ether, resorcinol diglycidyl ether, and triglycidyl ethers of para-aminophenols. Other suitable epoxy resins include reaction products of epichlorohydrin with o-cresol and, respectively, phenol novolacs. It is also possible to use a mixture of two or more epoxy resins.

In another embodiment, the epoxy resin useful in the preparation of the epoxy resin composition may be selected from commercially available products. For example, D.E.R.® 330, D.E.R.® 383, D.E.R.® 331, D.E.R.® 332, D.E.R.® 324, D.E.R.® 352, and D.E.R.® 354 available from The Dow Chemical Company may be used. Preferably, the epoxy resin component is D.E.R.® 331 (diglycidyl ether of bisphenol A) having an epoxide equivalent weight (EEW) of 182-192, a viscosity of 11000-14000 mPa-s, and a density of 1.16 g/cc according to the manufacturer The Dow Chemical Company.

Other suitable epoxy resins useful as a component in the present disclosure composition are disclosed in, for example, U.S. Patent Nos. 3,018,262; 7,163,973; 6,887,574; 6,632,893; 6,242,083; 7,037,958; 6,572,971; 6,153,719 and 5,405,688; PCT Publication WO 2006/052727; U.S. Patent Application Publication Nos. 20060293172; 20050171237 and 2007/0221890 A1; each of which is hereby incorporated herein by reference.

In general, the epoxy resin used in the epoxy resin composition has a viscosity in a range from 500 mPa-s to 30,000 mPa-s. In one embodiment, the epoxy resin used in the epoxy resin composition has a viscosity in a range from 1000 mPa-s to 20,000 mPa-s. In another embodiment, the epoxy resin used in the epoxy resin composition has a viscosity in a range from 8000 mPa-s to 15,000 mPa-s. The viscosity values are measured according to ASTM D445 at ambient temperature (23 °C).

The Part A of the epoxy system also includes a flexibilizer, as that term has been defined herein. Preferably, the flexibilizer is present in the Part A of the epoxy system in a range of from 20 wt% to 60 wt%, based on the total weight of the Part A of the epoxy system. More preferably, the flexibilizer is present in the Part A of the epoxy system in a range of from 25 wt% to 50 wt%, based on the total weight of the Part A of the epoxy system.

The flexibilizer of the present disclosure can be selected from the group consisting of an aliphatic liquid epoxy resin, a solid epoxy resin, a blocked isocyanate prepolymer, non-reactive hydrocarbon component and combinations thereof. Preferably, when the flexibilizer is an aliphatic epoxy resin it is a liquid epoxy resin that is a reaction product of epichlorohydrin and a poly alcohol. Examples include mono- and diglycidyl ethers of aliphatic alcohols, C2-C24 alkylene glycols and poly(ethylene oxide) or poly(propylene oxide) glycols.

Commercially available monoglycidyl ether, diglycidyl ethers of aliphatic alcohols that are useful include, C12-C14 alkylglycidylether, 1,6-Hexanediol diglycidylether and 1,4-Butanediol diglycidylether. Other polyglycidyl ethers that may be derived from aliphatic polyalcohols, such as ethylene glycol, diethylene glycol, triethylene glycol, 1,2-propylene glycol, 1,4-butylene glycol, triethylene glycol, 1,5-pentanediol, 1,6-hexanediol, cyclohexane dimethanol or trimethylolpropane are also useful. The polyglycol di-epoxide resin component provides toughness and flexibility to the cured epoxy system of the present disclosure. In accordance with a highly preferred embodiment of the present disclosure the polyglycol di-epoxide resin component includes those selected from the group consisting of D.E.R.™ 732 flexible epoxy resin and D.E.R.™ 736 flexible epoxy resin (both from The Dow Chemical Company) and combinations thereof. For the present disclosure, the aliphatic liquid epoxy resin used as the flexibilizer can be in a range of from 10 wt% to 17 wt%, based on the total weight of the Part A of the epoxy system.

The flexibilizer can also be a solid epoxy resin. Examples of the solid epoxy resin component include those having a Softening Point of 75 to 95 °C according to ASTM D3104. Specific examples of such solid epoxy resins include those selected from the group consisting of D.E.R™ 661 solid epoxy resin, D.E.R.™ 662E solid epoxy resin (both from The Dow Chemical Company). For the present disclosure, the solid epoxy resin component used as the flexibilizer can be in a range of from 7 wt% to 12 wt%, based on the total weight of the Part A of the epoxy system.

In accordance with another preferred embodiment of the present disclosure, the flexibilizer can also comprise a blocked isocyanate prepolymer. A variety of blocked isocyanate prepolymer can be used; particularly alkyl phenol blocked disocyanates and blocked isocyanate-terminated polyether prepolymers. A preferred alkyl phenol blocked prepolymer is an alkyl phenol blocked toluene diisocyanate having ether and blocked urethane groups. Examples of such blocked isocyanate prepolymer component include those selected from the group consisting of Desmocap 11A (Bayer MaterialScience LLC), Desmocap 12, Desmocap 12A, and combinations thereof. These structures can impart flexibility at low temperatures to the cured epoxy system of the present disclosure.

In the present disclosure only small amounts of the blocked isocyanate prepolymer are needed in order to develop enhanced properties. For the present disclosure, the amount of isocyanate prepolymer used as the flexibilizer can be in a range of from 5 wt % to 8 wt% based on the total weight of Part A of the epoxy system.

In accordance with another preferred embodiment of the present disclosure, the flexibilizer can also include a non-reactive hydrocarbon component. The hydrocarbon component additionally helps to provide a low viscosity, as discussed herein, to the epoxy system. Examples of the non-reactive hydrocarbon component include those that include aromatic hydrocarbons having good compatibility with epoxies, which are non-reactive, have low volatility and are moisture free (e.g., without water). One commercially available example of such a non-reactive hydrocarbon component includes, but is not limited to, Vycel E (Crowley Chemical Company). For the present disclosure, the non-reactive hydrocarbon component used as the flexibilizer can be in a range of from 7 wt% to 11 wt%, based on the total weight of the Part A of the epoxy system.

The Part A of the epoxy system also includes a catalyst component in a range from 3 wt% to 7 wt%, based on the total weight of the Part A of the epoxy system, which can help to speed the curing reaction of the epoxy system. Examples of the catalyst component are selected from the group consisting of methyl p-toluenesulfate (MPTS), ethyl p-toluenesulfate, salicylic acid, DABCO, DMP 30 and combinations thereof.

The Part B of the epoxy system includes a Mannich base hardener. In one embodiment, the Part B includes 100 wt% of the Mannich base hardener. Examples of Mannich base hardeners include those that are phenol free and that include methyl xylene diamine. The use of methyl xylene diamine in the Mannich base hardener helps to provide flexibility to the epoxy system once it has cured. Suitable examples of such Mannich base hardeners are sold under the trade designator POLYPOX® (The Dow Chemical Company). Examples of the POLYPOX® polyamine used as the Mannich base hardener include those selected from the group consisting of POLYPOX® H 013, POLYPOX® H 014, POLYPOX® H 015 and combinations thereof.

As discussed herein, the Part A of the epoxy system can include two or more flexibilizers. For example, the Part A of the epoxy system can include 50 wt% to 60 wt% of a liquid epoxy resin component based on a total weight of the Part A; 10 wt% to 17 wt% of a polyglycol di-epoxide resin component based on the total weight of the Part A; 7 wt% to 12 wt% of a solid epoxy resin component based on the total weight of the Part A, the solid epoxy resin component having a Softening Point of 75 °C to 95 °C according to ASTM D3104; 5 wt% to 8 wt% of a polyurethane prepolymer component based on the total weight of the Part A; 7 wt% to 11 wt% of a non-reactive hydrocarbon component based on the total weight of the Part A; and 3 wt% to 7 wt% of a catalyst component based on the total weight of the Part A. The wt% of the components of the Part A of the epoxy system totals 100 wt%. In other words, the wt% of the liquid epoxy resin component, the polyglycol di-epoxide resin component, the solid epoxy resin component, the polyurethane prepolymer component, the non-reactive hydrocarbon component, and the catalyst component of the Part A of the epoxy system adds up to total 100 wt%.

As discussed herein, the epoxy system of the present disclosure includes the Part A and the Part B. In preparing the epoxy system, prepare the Part A of the epoxy system by admixing the components of the Part A (the epoxy resin component, the flexiblizer component and the catalyst component) according to their respective weight percents as discussed herein. The Part B is also provided, where the Part B is the Mannich base hardener discussed herein.

Upon mixing under the reaction conditions (e.g., the times and the temperatures discussed herein), the Part A and the Part B of the epoxy system cure into a polymer network. Reaction conditions occur under the prevailing atmospheric pressure. With respect to temperature, the epoxy system of the present disclosure can cure at a temperature in the range of minus 0 °C up to 33 °C. Other ranges are also possible. For example, the epoxy system of the present disclosure can cure at a temperature in a range having a lower value of 0 °C or 5 °C to an upper value of 10 °C, 20 °C, 27 °C or 33 °C, where different combination of lower and upper values are possible. For example, the epoxy system of the present disclosure can cure at a temperature in a range of any one of; 0 °C to 33 °C; 0 °C to 27 °C; 0 °C to 20; 0 °C to 10 °C; 5 °C to 33 °C; 5 °C to 27 °C; 5 °C to 20; or 5 °C to 10 °C.

With respect to both time and temperature, contacting the Part A and the Part B of the epoxy system under reaction conditions comprising temperature range of from 0 to 5 °C for a time of 6 - 8 hours provides the epoxy system with sufficient mechanical properties that it can become traffic bearing. In an additional example, the contacting the Part A and the Part B of the epoxy system at a temperature of 25 °C for a time of 3 hours provides the epoxy system with a compressive strength of at least 7 MPa according to ASTM C109.

The mixing ratio of Part A to Part B for the epoxy system can be in a range from 5:1 to 1:1 by either weight or volume. For example, the mixing ratio of Part A to Part B for the epoxy system can be 5:1, 4:1, 3:1, 2:1, 5:4, 5:3, 5:2, 4:3, 3:2 or 1:1 by weight or volume. Preferably, the mixing ratio of Part A to Part B can be 2:1 by volume. Other ratios are also possible.

Upon mixing, the epoxy system has an initial viscosity in a range from 1500 to 7000 mPa-s. The viscosity values are measured according to ASTM D445 at ambient temperature (23 °C). Preferably, the epoxy system has an initial viscosity in a range from 2500 to 5000 mPa-s measured at 23 °C. Most preferably, the epoxy system has an initial viscosity of about 3000 mPa-s.

At a temperature of 0 °C, the epoxy system of the present disclosure has a thin film set time of no more than 7 hours, according to ASTM D1640. At a temperature of 5 °C, the epoxy system has a thin film set time of no more than 6 hours, according to ASTM D1640.

Upon curing, the epoxy system of the present disclosure has a Shore D hardness of at least 73 in 24 hours according to ASTM D2240. The epoxy system also cures to have a glass transition temperature (Tg) of 30 °C to 60 °C as measured by Differential Scanning Calorimetry (DSC). Preferably, the Tg of the epoxy system after curing is from 30 °C to 50 °C. Most preferably, the Tg of the epoxy system after curing is 40 °C to 50 °C.

As discussed herein, the epoxy system of the present disclosure can be used with a variety of concrete and non-concrete structures. For example, a reaction product of the epoxy system discussed herein can be used with concrete structures such as, but not limited to, roads, bridges, parking decks and/or concrete structures that need protection from water (e.g., water proofing) and/or protection from chemicals (e.g., salt).

### EXAMPLES

The following examples are given to illustrate, but not limit, the scope of this disclosure. The examples provide methods and specific embodiments of the Part A, the Part B and the epoxy system of the present disclosure.

### Materials

D.E.R.™ 331 (liquid epoxy resin component), available from The Dow Chemical Company.
D.E.R.™ 732 (polyglycol di-epoxide resin component), available from The Dow Chemical Company.
D.E.R.™ 661 (solid epoxy resin component), available from The Dow Chemical Company.
Desmocap 11A (polyurethane prepolymer component), available from Bayer MaterialScience LLC.
Vycel E (non-reactive hydrocarbon component), available from Crowley Chemical Company.
Methyl p-toluenesulfate (MPTS, catalyst component), available from Sigma Aldrich.
POLYPOX® H013 (Mannich base hardener), available from The Dow Chemical Company.

### Test Methods

Gel time tested according to ASTM C881.

Thin Film Set time, Initial Set Time and Final Set Time tested according to ASTM D1640.

Adhesion to concrete tested according to ACI 403.

Shore D hardness tested according to ASTM D2240.

Compressive Strength tested according to ASTM C109.

Tensile strength tested according to ASTM D638.

Tensile elongation (%) tested according to ASTM D638.

### Preparation of the Part A of the Epoxy system

Form the Part A of the epoxy system at 23 °C as follows. In a container mix 56.05 wt% of D.E.R.™ 331 for the liquid epoxy resin component, 14.25 wt% of D.E.R.™ 732 for the polyglycol di-epoxide resin component, 8.55 wt% of D.E.R.™ 661 for the solid epoxy resin component, 6.65 wt% of Desmocap 11A for the blocked isocyanate prepolymer component, 9.5 wt% of Vycel E for the non-reactive hydrocarbon component and 5.0 wt% of MPTS for the catalyst component

### Preparation of the Part B of the Epoxy System

The Mannich base hardener of the Part B is POLYPOX® H 013.

### Example 1 (Ex 1) of the Epoxy System

Prepare Ex 1 of the epoxy system as follows. Add a 2:1 ratio by volume of the Part A and the Part B to a glass beaker. Manually mix the contents of the glass beaker for about 1 minute at room temperature (at 23 °C). Form a thin film (wet film thickness of about .0635 millimeters) with the contents of the glass beaker on each one of three glass panels previously equilibrated to 25 °C, 4.4 °C and 0 °C. Immediately after forming the thin film affix the each of the glass panels to a Gardner B-K drying time recorder located in a constant temperature chamber set to the respective 25 °C, 4.4 °C and 0 °C temperatures. Determine the thin film set times of the coatings according to ASTM D 1640 at three temperatures: 25 °C, 4.4 °C and 0 °C. Repeat this procedure with a standard, commercially available comparative bridge overlay product.. The results are presented in Table 1.

**Table 1**

| | Thin Film Set Time ASTM D1640 (hrs) | | |
|---|---|---|---|
| | 25 °C | 4.4 °C | 0°C |
| Ex 1 | 1 | 5.5 | 6.8 |
| Comparative Example | 6.5 | 20 | >24 |

The mechanical properties of Ex 1 at two different temperatures (25 °C and 0 °C) are given in Table 2. The data for comparative, currently used in this application, as well as the DOT requirements for the State of Pennsylvania (PENN DOT Special Provision - c10431 ITEM 9043-2101 (ITEM 9043-0101) - EPOXY-BASED SURFACE TREATMENT FOR BRIDGE DECKS) are given as reference.

**Table 2 - Mechanical Properties of Ex 1**

| Property | Comparative Example | Ex 1 | | DOT requirement |
|---|---|---|---|---|
| | *25 °C* | *25 °C* | *0°C* | |
| *Gel Time (100g, minutes*) (ASTM C881) | 23 | 8 | - | - |
| *Initial Set Time (hours)* (ASTM D1640) | 6 | 1 | 2.8 | - |
| *Final Set time (hours)* (ASTM D1640) | 12-18 | 5 | 14 | - |
| *Adhesion to concrete* (ACI 403) | Failure in concrete | Failure in concrete | Failure in concrete | Failure in concrete |
| *Shore D hardness, 1 day* (ASTM D2240) | 65 | 73 | 73 | 60-70 |
| *Compressive Strength (mortar, MPa)* (ASTM C109) | | | | |
| *3 hours* | 1.72 | 29.3 | - | 6.9 minimum |
| *6 hours* | 15.2 | 45.4 | - | |
| *24 hours* | 39.7 | 45.4 | - | 34.5 minimum |
| *Tensile strength (MPa), 7 day* (ASTM D638) | 24.1 | 11.7 | 44.1 | 12.4-34.5 |
| *Tensile elongation (%), 1 day* (ASTM D638) | 25 ± 6 | 44 ± 11 | 21 ± 5 | 20-70% |

Figure 1 shows the development of cure over time for the epoxy system of Ex 1 and the comparative example, obtained using a TA Instruments Q1000 Differential Scanning Calorimetry (DSC). In order to determine the extent of cure, each of Ex 1 and the comparative example was first scanned in the temperature range of -100 °C and 300 °C at a constant heating rate (10 °C/minute) to determine the total heat of reaction. Each of Ex 1 and the comparative example was then freshly prepared at room temperature (23 °C) and was immediately loaded into multiple DSC pans, and these were hermetically sealed and stored at the desired temperature (4.4 °C). At the appropriate time (0, 2, 4, 8, 12, 24, 80 hours and at the end of 6 days) a sample was removed, weighed, and immediately scanned by DSC in the temperature range of -100 °C and 300 °C at a constant heating rate (10 °C/minute). This gave the residual heat of reaction for the sample. The extent of reaction was then calculated.

## Claims

1. An epoxy system, comprising:
a Part A having an epoxy resin component present in a range of 20 weight percent (wt%) to 70 wt%, based on a total weight of the Part A; a flexibilizer present in a range from 20 wt% to 60 wt%, based on the total weight of the Part A, wherein the flexibilizer includes a blocked isocyanate prepolymer present in a range of 5 wt% to 8 wt%, based on the total weight of the Part A ; and a catalyst present in a range of 3 wt% to 7 wt% based on the total weight of the Part A, wherein the catalyst comprises methyl p-toluenesulfate, and wherein the wt% of components of the Part A of the epoxy system totals 100 wt%; and
a Part B having a Mannich base hardener.

2. The epoxy system of claim 1, wherein the Part A and the Part B of the epoxy system cure at a temperature of 0 °C for a time of 7 hours to form a cured composition having an elongation to break of 21%.

3. The epoxy system of claim 1, wherein the epoxy system cures at a temperature of 25 °C for a time of 3 hours to achieve a compressive strength of at least 7 MPa according to ASTM C109.

4. The epoxy system of claim 1, wherein a mixture of the Part A and the Part B of the epoxy system has an initial viscosity of 1500 to 7000 mPa-s measured at 23 °C.

5. The epoxy system of claim 1, wherein the flexibilizer further includes a reaction product of epichlorohydrin and poly alcohol, a solid epoxy resin, a non-reactive hydrocarbon, or combinations thereof.

6. The epoxy system of claim 5, wherein the reaction product of epichlorohydrin and poly alcohol is present in the range of 10 wt% to 17 wt%, based on the total weight of the Part A of the epoxy system.

7. The epoxy system of claim 5, wherein the solid epoxy resin is present in the range of 7 wt% to 12 wt%, based on the total weight of the Part A of the epoxy system.

8. The epoxy system of claim 5, wherein the non-reactive hydrocarbon component is present in the range of 7 wt% to 11 wt%, based on the total weight of the Part A of the epoxy system.

9. The epoxy system of claim 1, wherein upon curing at 25 °C, the epoxy system has an elongation at break in the range of 20 percent to 50 percent tested according to ASTM D638.

10. The epoxy system of claim 1, wherein upon curing at 0 °C, the epoxy system has an elongation at break in the range of 10 percent to 25 percent tested according to ASTM D638.

11. The epoxy system of claim 1, wherein the epoxy system cures to have a Tg of 30 °C to 50 °C.

12. The epoxy system of claim 1, wherein the epoxy system has a thin film set time of no more than 7 hours at 0 °C tested according to ASTM D1640.

13. The epoxy system of claim 1, wherein the epoxy system has a thin film set time of no more than 6 hours at 5 °C tested according to ASTM D1640.

14. A concrete structure that includes a reaction product of the epoxy system of claim 1.

## Patentansprüche

1. Ein Epoxidsystem, das Folgendes beinhaltet:
einen Teil A, der Folgendes aufweist: eine Epoxidharzkomponente, die in einem Bereich von 20 Gewichtsprozent (Gew.-%) bis 70 Gew.-%, bezogen auf ein Gesamtgewicht des Teils A, vorhanden ist; einen Weichmacher, der in einem Bereich von 20 Gew.-% bis 60 Gew.-%, bezogen auf das Gesamtgewicht des Teils A, vorhanden ist, wobei der Weichmacher ein blockiertes Isocyanat-Präpolymer umfasst, das in einem Bereich von 5 Gew.-% bis 8 Gew.-%, bezogen auf das Gesamtgewicht des Teils A, vorhanden ist; und einen Katalysator, der in einem Bereich von 3 Gew.-% bis 7 Gew.-%, bezogen auf das Gesamtgewicht des Teils A, vorhanden ist, wobei der Katalysator Methyl-p-Toluolsulfat beinhaltet und wobei sich die Gew.-% der Komponenten des Teils A des Epoxidsystems auf 100 Gew.-% summieren; und
einen Teil B, der einen Mannich-Basen-Härter aufweist.

2. Epoxidsystem gemäß Anspruch 1, wobei der Teil A und der Teil B des Epoxidsystems bei einer Temperatur von 0 °C über einen Zeitraum von 7 Stunden aushärten, um eine ausgehärtete Zusammensetzung mit einer Dehnung bis zum Bruch von 21 % zu bilden.

3. Epoxidsystem gemäß Anspruch 1, wobei das Epoxidsystem bei einer Temperatur von 25 °C über einen Zeitraum von 3 Stunden aushärtet, um eine Druckfestigkeit von mindestens 7 MPa gemäß ASTM C109 zu erreichen.

4. Epoxidsystem gemäß Anspruch 1, wobei eine Mischung aus dem Teil A und dem Teil B des Epoxidsystems eine Ausgangsviskosität von 1500 bis 7000 mPa·s, gemessen bei 23 °C, aufweist.

5. Epoxidsystem gemäß Anspruch 1, wobei der Weichmacher ferner ein Reaktionsprodukt von Epichlorhydrin und Polyalkohol, ein festes Epoxidharz, einen nichtreaktiven Kohlenwasserstoff oder Kombinationen davon umfasst.

6. Epoxidsystem gemäß Anspruch 5, wobei das Reaktionsprodukt von Epichlorhydrin und Polyalkohol in dem Bereich von 10 Gew.-% bis 17 Gew.-%, bezogen auf das Gesamtgewicht des Teils A des Epoxidsystems, vorhanden ist.

7. Epoxidsystem gemäß Anspruch 5, wobei das feste Epoxidharz in dem Bereich von 7 Gew.-% bis 12 Gew.-%, bezogen auf das Gesamtgewicht des Teils A des Epoxidsystems, vorhanden ist.

8. Epoxidsystem gemäß Anspruch 5, wobei die nichtreaktive Kohlenwasserstoffkomponente in dem Bereich von 7 Gew.-% bis 11 Gew.-%, bezogen auf das Gesamtgewicht des Teils A des Epoxidsystems, vorhanden ist.

9. Epoxidsystem gemäß Anspruch 1, wobei das Epoxidsystem nach Aushärtung bei 25 °C eine Bruchdehnung in dem Bereich von 20 Prozent bis 50 Prozent, geprüft gemäß ASTM D638, aufweist.

10. Epoxidsystem gemäß Anspruch 1, wobei das Epoxidsystem nach Aushärtung bei 0 °C eine Bruchdehnung in dem Bereich von 10 Prozent bis 25 Prozent, geprüft gemäß ASTM D638, aufweist.

11. Epoxidsystem gemäß Anspruch 1, wobei das Epoxidsystem aushärtet, um eine Tg von 30 °C bis 50 °C aufzuweisen.

12. Epoxidsystem gemäß Anspruch 1, wobei das Epoxidsystem eine Dünnschicht-Erstarrungsdauer von nicht mehr als 7 Stunden bei 0 °C, geprüft gemäß ASTM D1640, aufweist.

13. Epoxidsystem gemäß Anspruch 1, wobei das Epoxidsystem eine Dünnschicht-Erstarrungsdauer von nicht mehr als 6 Stunden bei 5 °C, geprüft gemäß ASTM D1640, aufweist.

14. Eine Betonstruktur, die ein Reaktionsprodukt des Epoxidsystems gemäß Anspruch 1 umfasst.

## Revendications

1. Un système époxy, comprenant :
une Partie A ayant un constituant résine époxy présent dans une gamme allant de 20 pour cent en poids (% en poids) à 70 % en poids, rapporté à un poids total de la Partie A ; un adjuvant d'assouplissement présent dans une gamme allant de 20 % en poids à 60 % en poids, rapporté au poids total de la Partie A, dans lequel l'adjuvant d'assouplissement inclut un prépolymère d'isocyanate séquencé présent dans une gamme allant de 5 % en poids à 8 % en poids, rapporté au poids total de la Partie A ; et un catalyseur présent dans une gamme allant de 3 % en poids à 7 % en poids rapporté au poids total de la Partie A, dans lequel le catalyseur comprend du p-toluène sulfate de méthyle, et dans lequel le % en poids des constituants de la Partie A du système époxy font un total de 100 % en poids ; et
une Partie B ayant un durcisseur de type base de Mannich.

2. Le système époxy de la revendication 1, dans lequel la Partie A et la Partie B du système époxy durcissent à une température de 0 °C pendant une durée de 7 heures afin de former une composition durcie ayant un allongement à la rupture de 21 %.

3. Le système époxy de la revendication 1, le système époxy durcissant à une température de 25 °C pendant une durée de 3 heures afin d'atteindre une résistance à la compression d'au moins 7 MPa selon l'ASTM C109.

4. Le système époxy de la revendication 1, dans lequel un mélange de la Partie A et de la Partie B du système époxy a une viscosité initiale allant de 1 500 à 7 000 mPa-s mesurée à 23 °C.

5. Le système époxy de la revendication 1, dans lequel l'adjuvant d'assouplissement inclut en outre un produit de réaction d'épichlorhydrine et de polyalcool, une résine époxy solide, un hydrocarbure non réactif, ou des combinaisons de ceux-ci.

6. Le système époxy de la revendication 5, dans lequel le produit de réaction d'épichlorhydrine et de polyalcool est présent dans la gamme allant de 10 % en poids à 17 % en poids, rapporté au poids total de la Partie A du système époxy.

7. Le système époxy de la revendication 5, dans lequel la résine époxy solide est présente dans la gamme allant de 7 % en poids à 12 % en poids, rapporté au poids total de la Partie A du système époxy.

8. Le système époxy de la revendication 5, dans lequel le constituant hydrocarbure non réactif est présent dans la gamme allant de 7 % en poids à 11 % en poids, rapporté au poids total de la Partie A du système époxy.

9. Le système époxy de la revendication 1, le système époxy ayant, lors d'un durcissement à 25 °C, un allongement à la rupture compris dans la gamme allant de 20 pour cent à 50 pour cent testé selon l'ASTM D638.

10. Le système époxy de la revendication 1, le système époxy ayant, lors d'un durcissement à 0 °C, un allongement à la rupture compris dans la gamme allant de 10 pour cent à 25 pour cent testé selon l'ASTM D638.

11. Le système époxy de la revendication 1, le système époxy durcissant afin d'avoir une Tg allant de 30 °C à 50 °C.

12. Le système époxy de la revendication 1, le système époxy ayant un temps de prise de film mince n'excédant pas 7 heures à 0 °C testé selon l'ASTM D1640.

13. Le système époxy de la revendication 1, le système époxy ayant un temps de prise de film mince n'excédant pas 6 heures à 5 °C testé selon l'ASTM D1640.

14. Une structure en béton qui inclut un produit de réaction du système époxy de la revendication 1.
